# Europäisches Patentamt

# European Patent Office

# Office européen des brevets

(19)

(11) Numéro de publication: **0 124 432**
**B1**

(12) **FASCICULE DE BREVET EUROPÉEN**

(45) Date de publication du fascicule du brevet:
**10.08.88**

(51) Int. Cl.⁴: **B 05 B 7/22,** B 05 B 12/12,
B 05 D 7/02, C 23 C 4/00

(21) Numéro de dépôt: **84400823.5**

(22) Date de dépôt: **24.04.84**

(54) **Procédé et dispositif pour le revêtement d'une pièce par projection de plasma.**

(30) Priorité: **29.04.83 FR 8307165**

(43) Date de publication de la demande:
**07.11.84 Bulletin 84/45**

(45) Mention de la délivrance du brevet:
**10.08.88 Bulletin 88/32**

(84) Etats contractants désignés:
**AT BE CH DE GB IT LI SE**

(56) Documents cité:
**EP-A-0 010 632**
**FR-A-2 153 080**
**FR-A-2 224 991**
**FR-A-2 301 155**
**FR-A-2 347 111**
**FR-A-2 348 933**
**GB-A-2 063 926**

(73) Titulaire: **COMMISSARIAT A L'ENERGIE
ATOMIQUE, 31/33, rue de la Fédération, F-75015
Paris (FR)**

(72) Inventeur: **Dubust, Jean- Charles, 15 rue Mozart,
F-91470 Limours (FR)**
Inventeur: **Boncoeur, Marcel, 22 rue Marsoulan,
F-75012 Paris (FR)**
Inventeur: **Hansz, Bernard, 28 rue Marcel Charon,
F-91710 Vert- le- Petit (FR)**

(74) Mandataire: **Mongrédien, André, c/o BREVATOME
25, rue de Ponthieu, F-75008 Paris (FR)**

LIBER, STOCKHOLM 1988

## Description

La présente invention a pour objet un procédé et un dispositif de projection de plasma permettant en particulier de réaliser des dépôts sur des substrats résistant mal à de hautes températures et de réaliser le dépôt de substances actives chimiquement ou avides d'oxygène.

La projection de plasma est bien connue et largement utilisée pour réaliser des revêtements, par exemple sur des matériaux composites tels que les résines ou les plastiques qu'il faut revêtir avec des couches minces de céramique ou des couches métalliques. Cette méthode est également utilisée pour réaliser des revêtements protecteurs dans le domaine de la mécanique (alliages pour l'aéronautique ou l'automobile) ou le domaine nucléaire (réalisation de barrières d'absorption).

Initialement, cette opération se déroulait à l'air, ce qui rendait impossible le dépôt de certains matériaux réagissant avec l'oxygène comme les borures et les carbures. On ne pouvait pas non plus réaliser le dépôt sur des supports eux-mêmes réactifs comme l'aluminium, le magnésium ou leurs alliages. C'est pourquoi on a pensé à réaliser la projection soit sous atmosphère neutre, par exemple dans des chambres sous argon, soit dans une enceinte sous vide partiel, la pression résiduelle étant de l'ordre de 50 à 200 millibars. Cette méthode permet de travailler à des températures élevées, de l'ordre de 600 à 700°C et de revêtir des superalliages en facilitant la diffusion du produit projeté dans le métal de base. Cependant, cette méthode n'est toujours pas applicable lorsque le substrat est un matériau qui résiste mal aux temperatures élevées c'est le cas de certains matériaux composites comme les fibres de silice liées par de la résine qui deviennent instables au-delà de 120°C et avec lesquelles il est difficile d'envisager une projection de plasma puisque cette opération engendre des températures bien supérieures. En particulier, il n'est pas possible avec cette méthode de réaliser des dépôts de forte épaisseur à cause des phénomènes de fissuration.

Le document FR-A-2 347 111 décrit un procédé de revêtement par projection de plasma dans lequel on refroidit la pièce à traiter en projetant sur elle un ou plusieurs jets de gaz carbonique au voisinage de la zone se trouvant sous le pistolet de projection.

Le document EP-A-0 010 632 décrit un procédé de traitement de surface d'un matériau se présentant sous ta forme d'une bande défilant en continu. L'opération se déroule à l'intérieur d'une enceinte étanche balayée par un mélange gazeux qui est dosé avant de pénétrer dans l'enceinte.

La présente invention a justement pour but d'éliminer ces inconvénients en proposant un procédé et un dispositif de projection de plasma qui permettent d'effectuer les dépôts de n'importe quelle substance, y compris des substances avides d'oxygène ou très actives chimiquement, sur des substrats résistant mal à des températures élevées ou eux-mêmes réactifs chimiquement et qui permettent de réaliser des dépôts de forte épaisseur.

Le procédé tel qu'il est connu du document FR-A-2 347 111 est un procédé de revêtement d'une pièce par projection de plasma, l'opération étant effectuée à l'aide d'un pistolet de projection mobile par rapport à ladite pièce, dans lequel on refroidit la pièce à l'aide d'un gaz liquéfié afin de réguler la température des différents points de celle-ci cette opération étant effectuée à l'aide d'un système de refroidissement mobile par rapport à la pièce.

Selon l'invention, on effectue l'opération sous atmosphère contrôlée à l'intérieur d'une enceinte étanche (1) on maintient constantes la pression et la composition de l'atmosphère régnant dans l'enceinte, on régule la température des différents points de la pièce (8) selon un programme prédéterminé, on pilote de manière automatique les déplacements relatifs de la pièce, du pistolet et du système de refroidissement, et on projette le gaz liquéfié sous forme de gouttelettes ces gouttelettes étant confinées dans la zone de la pièce où est effectuée la projection de plasma, le gaz liquéfié étant à une température inférieure à sa température de saturation, l'écart entre ces deux températures étant inférieur ou égal à 15°C.

Selon une autre caractéristique de ce procédé, on analyse en continu l'atmosphère régnant dans ladite enceinte étanche et on réalise le contrôle de cette atmosphère par un balayage de l'enceinte à l'aide d'un gaz, les conditions de balayage étant déterminées en fonction des résultats de l'analyse.

La température de saturation d'un liquide est définie comme étant la température à laquelle la vapeur dissoute dans le liquide commence à se dégager: dans le cas d'un gaz liquéfié notamment, cette température est voisine, mais différente, de la température d'ébullition.

Avantageusement, on utilise au moins un gaz porteur pour effectuer la projection de gouttelettes et on règle le débit et la pression du gaz liquéfié et du gaz porteur pour que les gouttelettes de gaz liquéfié soient sphériques et aient un diamètre inférieur ou égal à 40 microns.

L'utilisation de gouttelettes de gaz liquéfié permet un refroidissement très énergique et la température de la pièce peut être maintenue à une valeur très basse (de l'ordre de 20 à 50°C et en tout cas inférieure à 100°C) même dans la zone de projection on peut donc, grâce à l'invention, revêtir n'importe quel matériau y compris des substances instables à des températures élevées. On peut aussi réaliser des dépôts de grande épaisseur (1 cm et davantage) car le refroidissement est suffisamment énergique pour éliminer les phénomènes de fissuration. Comme, d'autre part, l'atmosphère à l'intérieur de l'enceinte étanche est contrôlée en permanence, on évite des réactions parasites et on peut utiliser n'importe quel matériau soit comme substrat soit comme produit de revêtement.

Afin d'assurer un refroidissement efficace, il faut que les gouttelettes du liquide soient très fines et qu'elles ne soient pas mélangées à de la vapeur, ce qui aurait pour effet de diminuer la capacité de refroidissement. Le fait que le liquide soit sous forme monophasique permet en outre d'éviter les à-coups dans les canalisations et rend plus facile l'obtention de gouttelettes ayant des dimensions homogènes. Les gaz liquéfiés étant généralement stockés à des températures proches de leur température d'ébullition, donc proches de leur température de saturation, la température d'utilisation est inférieure à la température de saturation sans que l'écart dépasse 15°C: l'expression "température proche de la température de saturation" employée dans le présent texte désigne une température dont l'écart avec la température de saturation ne dépasse pas 15°C. On évite ainsi que la vapeur ne se dégage avant que le liquide se mélange au gaz porteur. Par exemple, lorsque le liquide de refroidissement est de l'azote sous un bar, on opère à -206°C pour une température de saturation de -196°C environ, cette dernière étant déterminée expérimentalement. Le tableau ci-dessous indique les températures utilisées en fonction de la pression pour l'azote et l'argon.

**Tableau**

| Pression (bar) | Azote | Argon |
|---|---|---|
| 1 | - 206°C | - 198°C |
| 2 | - 199°C | - 191°C |
| 3 | - 195°C | - 187°C |

Quant au gaz porteur, il a pour effet non seulement d'entraîner les gouttelettes de gaz liquéfié, mais aussi de favoriser les échanges thermiques et d'abaisser la tension superficielle du liquide, ce qui améliore le contact avec le matériau à refroidir. Le gaz porteur, qui peut être un gaz pur comme l'hélium ou un mélange (hélium et argon par exemple) sera choisi par l'homme de l'art en fonction de chaque cas particulier.

L'invention a également pour objet un dispositif pour la mise en oeuvre de ce procédé.

Ce dispositif comporte, de manière connue (FR-A-2 347 111):

. un support mobile pour la pièce à revêtir,
. un pistolet de projection de plasma mobile par rapport à ladite pièce, et
. un système de refroidissement également mobile par rapport à ladite pièce.

Selon l'invention, le support mobile, le pistolet et le système de refroidissement se rouvent à l'intérieur d'une enceinte étanche et il comporte en outre:

- un dispositif de synchronisation des mouvements relatifs de la pièce, du pistolet et du système de refroidissement,
- des capteurs de température placés à l'intérieur de l'enceinte pour contrôler la température de la pièce et de l'atmosphère régnant dans l'enceinte,
- des moyens d'analyse du gaz se trouvant dans l'enceinte, et
- des moyens de balayage de l'enceinte à l'aide d'un gaz.

Le support de la pièce à revêtir peut être mobile en rotation autour d'un axe vertical, par exemple si la pièce présente une symétrie de révolution ou avoir la forme d'un disque mobile en rotation dans un plan vertical (s'il s'agit d'une pièce plane) ou avoir une orientation quelconque en fonction de chaque cas particulier.

Avantageusement, on peut prévoir un passage tournant dans le support pour les fils des capteurs de température lorsque ceux-ci sont placés à l'intérieur de la pièce.

Suivant une autre caractéristique de ce dispositif, le pistolet de projection comprend:

- une anode ayant sensiblement la forme d'un cylindre creux,
- une cathode disposée sensiblement concentriquement à ladite anode, et

une enveloppe externe entourant ladite anode et ayant une forme telle qu'elle définit autour de l'anode et de la cathode un passage permettant la circulation d'un liquide de refroidissement, ce passage définissant autour de l'anode une chambre ayant des dimensions suffisamment réduites pour que le liquide puisse s'écouler autour de l'anode avec une vitesse suffisante pour assurer le refroidissement avec une efficacité maximale.

Dans le mode de réalisation préféré, l'anode est en cuivre et les parties de cette anode situées en regard de la cathode sont recouvertes de rhénium.

Selon une autre caractéristique du dispositif objet de l'invention, le système de refroidissement comprend:

- au moins une buse équipée d'un orifice pour la sortie des gouttelettes de gaz liquéfié,
- au moins un réservoir de gaz liquéfié relié à ladite buse par une première canalisation,
- au moins un réservoir de gaz porteur relié à ladite buse par une deuxième canalisation,
- un écran de confinement placé au voisinage de la zone de la pièce où est effectuée la projection de plasma, et
- au moins un capteur de température pour contrôler la température de la pièce.

Selon un mode de réalisation préféré de ce dispositif, la buse comprend:

- un raccord d'entrée du gaz liquéfié,
- un premier orifice reliant le raccord d'entrée du gaz liquéfié à une chambre de détente,
- un conduit reliant ladite chambre de détente à un deuxième orifice,
- une cavité dans laquelle débouche ie deuxième orifice, cette cavité étant en communication avec l'extérieur par ledit orifice de sortie du liquide de refroidissement,
- un raccord d'entrée du gaz porteur, et
- un conduit reliant le raccord d'entrée du gaz porteur à ladite cavité.

Suivant le mode de réalisation préféré du dispositif, la buse et l'écran de confinement sont mobiles par rapport à la pièce et l'agencement du dispositif est tel que la distance entre l'orifice de la buse et la pièce reste constante au cours du déplacement relatif de la buse et de la pièce, cette distance étant comprise entre 5 et 100 mm et de préférence entre 5 et 50 mm.

Avantageusement, la première canalisation reliant la buse au réservoir de gaz liquéfié peut être une canalisation à double enveloppe.

Pour assurer la projection dans de bonnes conditions, les dimensions de ladite première canalisation doivent être telles que le gaz liquéfié se trouve sous forme monophasique à son entrée dans la buse.

Ce résultat est obtenu lorsque la première canalisation présente une longueur inférieure ou égale à 5 m et un diamètre de passage du gaz liquéfié inférieur ou égal à 12 mm si la pression de ce dernier est comprise entre 1 et 1,5 bar.

D'autre part, les différents appareils se trouvant à l'intérieur de l'enceinte étant soumis à des conditions sévères et en particulier à un champ électromagnétique intense, on a prévu de relier chacun de ces appareils à la masse par l'intermédiaire d'un condensateur.

Le dispositif de synchronisation est un dispositif à mémoires mortes et les moteurs commandant les mouvements des différentes pièces mobiles sont protégés par des blindages.

Enfin, on peut avantageusement équiper l'enceinte à l'intérieur de laquelle se déroule la projection d'un ou plusieurs hublots d'observation imperméables aux rayons ultraviolets et prévoir une isolation phonique.

L'invention apparaîtra mieux à la lecture de la description qui va suivre, donnée à titre purement illustratif et nullement limitatif, en référence aux dessins annexés dans lesquels:
- la figure 1 est une vue schématique en coupe verticale de l'ensemble du disposible objet de l'invention,
- la figure 2 est une vue schématique en coupe verticale d'un distributeur de poudre utilisé dans le dispositif de la figure 1,
- la figure 3 est une vue schématique en coupe du pistolet de projection utilisé dans le dispositif de la figure 1,
- la figure 4 est une vue schématique illustrant le système de refroidissement utilisé dans l'invention,
- la figure 5 est une vue de dessus illustrant la disposition du système de refroidissement par rapport à la pièce à revêtir,
- la figure 6 est une vue schématique en élévation montrant un autre mode de réalisation du support portant les pièces à revêtir, et
- la figure 7 est une vue schématique en coupe d'une buse utilisée pour projeter le liquide de refroidissement.

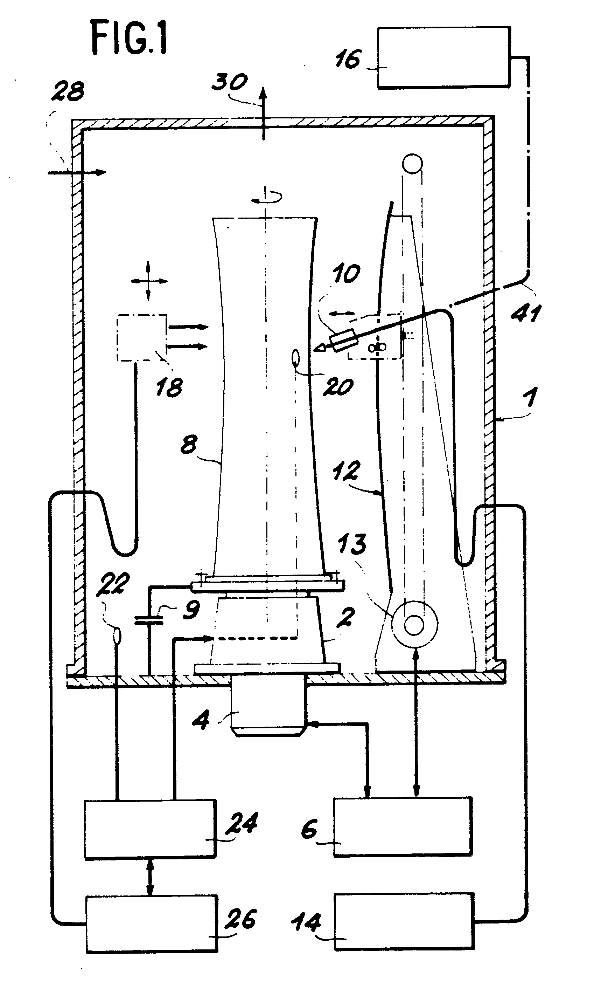

Sur la figure 1, on voit que le dispositif objet de l'invention se compose essentiellement d'une enceinte étanche 1 à l'intérieur de laquelle la pièce à revêtir 8 repose sur un support 2 mobile en rotation autour d'un axe vertical grâce à un moteur 4. Dans le cas particulier décrit ici, la pièce à revêtir 8 présente une symétrie de révolution et elle est disposée sur le support 2 de sorte que son axe de symétrie soit confondu avec l'axe de rotation de ce support. La projection de plasma est effectuée grâce à un pistolet 10 mobile le long d'un gabarit 12 grâce à un mécanisme d'entraînement 13.

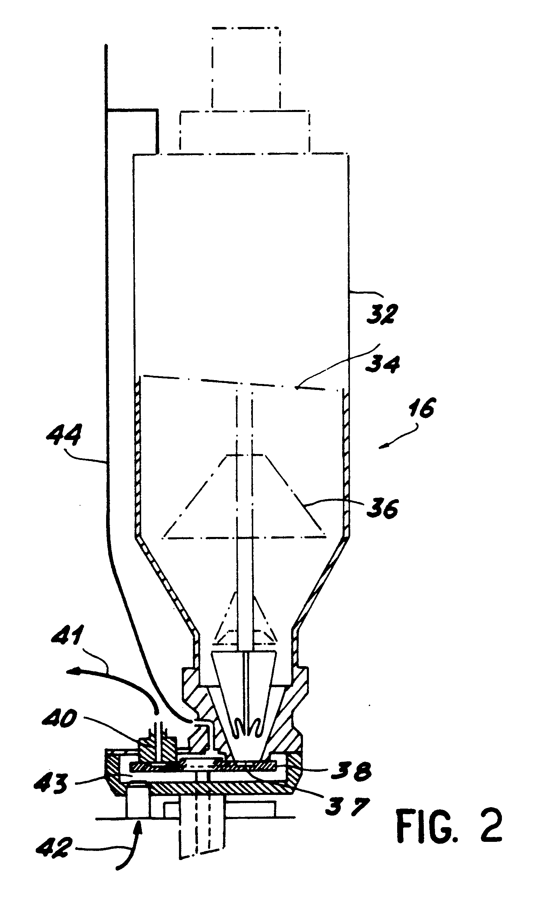

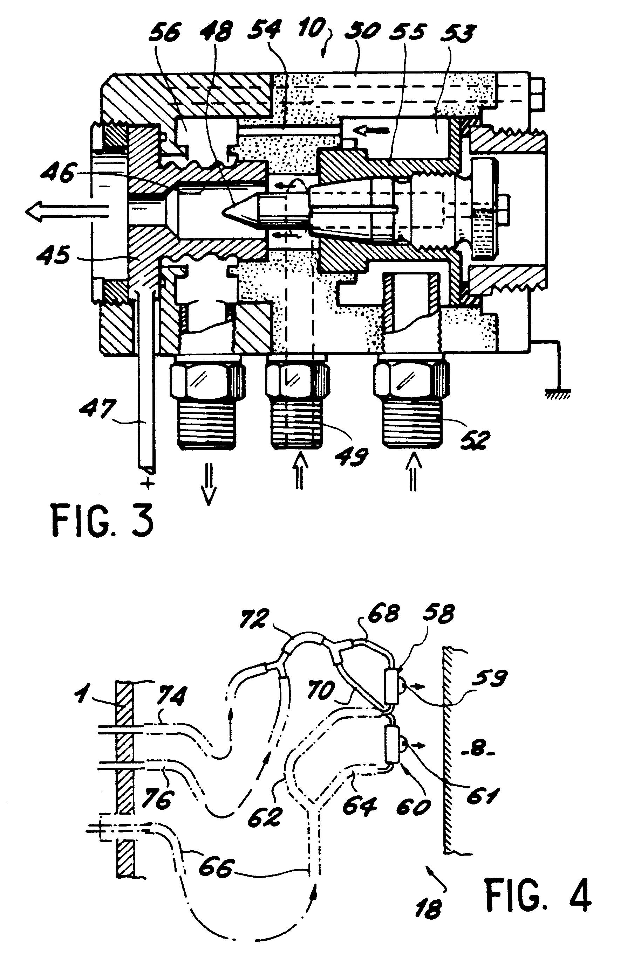

Un dispositif de synchronisation 6 placé à l'extérieur de l'enceinte 1 contrôle à la fois les mouvements du pistolet 10 et du moteur 4 afin que la combinaison de la rotation de la pièce 8 autour de son axe et des déplacements du pistolet le long du gabarit 12 permette d'effectuer le dépôt sur toute la surface de la pièce 8. Le pistolet 10 est relié d'une part à un pupitre de contrôle de plasma 14 et, d'autre part, à un distributeur de poudre 16 par un tuyau 41. Le pupitre 14 permet de contrôler l'arrivée sur le pistolet des gaz nécessaires à la réalisation du plasma, c'est-à-dire, dans le cas particulier décrit ici, de l'hélium et de l'argon, ainsi que de l'eau nécessaire à son refroidissement. Quant au distributeur de poudre 16, il contient sous forme pulvérulente le produit projeté, par exemple du bore ou un composé de corps réfractaires comme le carbure de bore. Le pistolet 10 et le distributeur de poudre 16 seront décrits plus en détail ci-après en référence aux figures 2 et 3.

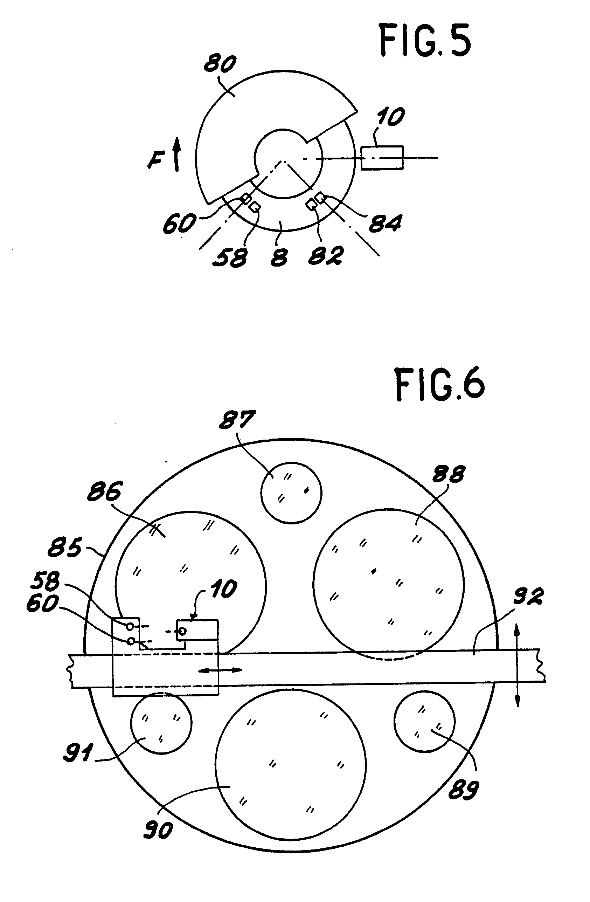

On voit encore sur la figure 1 le système de refroidissement 18 utilisé pour refroidir la pièce 8 dans la zone où est effectuée la projection. Ce système se trouve à la même hauteur que le pistolet 10 par rapport à la pièce 8, et il est également mobile le long de cette piece grâce au dispositif de synchronisation 6. Le système de refroidissement 18 fera l'objet d'une description plus détaillée ci-dessous en référence aux figures 4 et 5.

Afin de régler au mieux les paramètres de fonctionnement du système de refroidissement 18 et l'état de l'atmosphère régnant dans l'enceinte 1, on a prévu un certain nombre de capteurs de température pour connaître la température de la pièce 8 et de l'atmosphère régnant dans l'enceinte. On a représenté schématiquement sur la figure un capteur 20 à l'intérieur de la pièce et un capteur 22 dans l'enceinte 1 reliés à un dispositif de contrôle 24, lequel permet de réagir sur les paramètres de fonctionnement du système 18 grâce à un dispositif de commande 26.

D'autre part, pour régler la composition de l'atmosphère régnant dans l'enceinte 1, on a prévu un balayage de celle-ci à l'aide d'un gaz neutre, par exemple de l'argon, ainsi qu'un clapet taré permettant l'évacuation des gaz contenus dans l'enceinte si la pression devient supérieure à une valeur prédéterminée. L'introduction du gaz de balayage dans l'enceinte est symbolisée par la flèche 28 et l'extraction du gaz en cas de surpression par la flèche 30. On analyse constamment la composition du gaz contenu dans l'enceinte et on ajuste les conditions de balayage en fonction des résultats de l'analyse: en effet, la projection de plasma elle-même et le refroidissement de la pièce 8 à l'aide du système 18 introduisent dans l'enceinte 1 des gaz qu'il faut évacuer. C'est pourquoi on contrôle constamment la pression et la composition de l'atmosphère régnant dans celle-ci pour régler le débit de balayage en conséquence. Il se peut même éventuellement qu'on arrête le balayage si la composition reste dans les normes prescrites et si la pression reste inférieure à la valeur limite prédéterminée.

Ainsi, le fait qu'on contrôle l'atmosphère régnant dans l'enceinte permet d'utiliser comme substrat ou comme substance à déposer des matériaux très actifs chimiquement puisque l'opération se déroule sous atmosphère neutre, tandis que le fait de refroidir avec des gouttelettes d'un gaz liquéfié permet un refroidissement très efficace et donc d'utiliser des matériaux instables au-delà d'une température relativement faible, de l'ordre de 100°C. En effet, l'utilisation d'un liquide cryogénique, par exemple un gaz liquéfié comme l'hélium, l'azote ou l'argon, permet de maintenir la température de la pièce à une valeur inférieure à 50°C.

Enfin, étant donné que la création d'un jet de plasma provoque la formation d'un champ électromagnétique très intense dans l'enceinte 1, on a prévu de protéger tous les appareils se trouvant à l'intérieur de celle-ci en les reliant à la masse par des condensateurs on voit sur la figure 1 le condensateur 9 qui relie le support 2 à la masse métallique constituée par la paroi inférieure de l'enceinte 1, mais tous les autres éléments, en particulier le pistolet 10 et le système de refroidissement 18, sont également protégés par des condensateurs.

Eventuellement, on peut prévoir un passage tournant dans le support 2 pour le passage des fils nécessaires au fonctionnement des différents appareils. D'autres aménagements peuvent utilement être prévus, comme des hublots d'observation, mais ceux-ci doivent être imperméables aux rayons ultraviolets, et une isolation phonique à cause du bruit important provoqué par la création du jet de plasma.

La figure 2 montre plus en détail le distributeur de poudre 16 qui se compose essentiellement d'un récipient cylindrique 32 dans lequel est stockée la masse de poudre 34 tandis qu'un cône 36, dont l'axe est confondu avec celui du récipient 32, permet un écoulement régulier de la poudre. Celle-ci tombe à la partie inférieure du dispositif dans une rainure annulaire 37 ménagée sur un plateau 38 mobile en rotation, ce qui l'entraîne jusqu'à un raccord 40 permettant le raccordement d'un tuyau 41 dont l'autre extrémité est branchée sur le pistolet 10. L'entraînement de la poudre est assuré par un gaz, par exemple de l'argon, qui arrive grâce à une canalisation 42 dans une chambre 43 à l'intérieur de laquelle le plateau 38 peut tourner le gaz pénètre dans la rainure 37, ce qui assure l'entraînement de la poudre et son évacuation par le tuyau 41. Enfin, une conduite 44 permet une circulation de gaz le long du récipient 32, facilitant ainsi l'évacuation de la poudre.

Le pistolet 10 apparaît mieux sur la vue en coupe de la figure 3, où l'on voit qu'il se compose essentiellement d'une anode 45 reliée à une source de courant (non représentée) par un fil 47, cette anode présentant une symétrie de révolution et ayant sensiblement la forme d'un cylindre creux. Un passage 46 est prévu sensiblement suivant l'axe de symétrie de cette anode et la cathode 48 est disposée à l'intérieur de cet espace. L'anode et la cathode sont entourées d'une enveloppe externe 50 ayant une forme et des dimensions telles que soit ménagé un passage pour l'eau de refroidissement entre l'anode et la cathode d'une part et l'enveloppe externe d'autre part. On voit encore sur la figure le raccord 49 où aboutit le tuyau amenant le mélange de poudre et de gaz nécessaire à la création du plasma. Dans le mode particulier de réalisation décrit ici, la cathode est en tungstène, et l'anode 45 est en cuivre recouverte intérieurement de rhénium dans l'espace 46, la couche de rhénium assurant la protection thermique de l'anode.

Etant donné le fort dégagement de chaleur provoqué par la décharge électrique entre l'anode et la cathode pour la création du plasma, un refroidissement énergique du pistolet est nécessaire. Pour cela, on a prévu une circulation d'eau, celle-ci pénétrant dans le pistolet par un raccord 52 et circulant d'abord dans une chambre 53 entourant le support 55 de la cathode, puis dans un conduit 54 et arrivant dans une chambre 56 entourant l'anode. Cette dernière doit être suffisamment refroidie pour obtenir un bon écoulement du plasma hors de l'espace 46. Pour cela, on effectue le refroidissement avec une eau dont la température est inférieure à 10°C et de préférence inférieure à 8°C, tandis que les dimensions de la chambre 56 sont prévues suffisamment faibles pour que l'eau puisse s'écouler rapidement autour de l'anode et évacuer les calories produites avec un maximum d'efficacite.

La figure 4 montre le système de refroidissement 18 utilisé pour maintenir à un niveau très bas la température de la pièce à revêtir dans la zone ou est effectué le dépôt. On voit sur la figure deux buses 58 et 60 avec des orifices 59 et 61 respectivement pour la sortie des gouttelettes de gaz liquéfié. Les buses 58 et 60 sont reliées par deux canalisations 62 et 64 à une canalisation commune 66 qui les met en communication avec un réservoir de gaz liquéfié, par exemple de l'argon liquide, disposé à l'extérieur de l'enceinte 1 et non représenté sur la figure.

Pour réaliser la formation de gouttelettes, il est nécessaire d'entraîner le gaz liquéfié à l'aide d'un autre gaz sous pression, dit "gaz porteur". Eventuellement, on peut prévoir de mélanger le gaz porteur avec un autre gaz pour régler la tension superficielle des gouttelettes de gaz liquéfié et obtenir un meilleur refroidissement lorsque celles-ci se déposent sur la pièce 8. On voit sur la figure que les buses 58 et 60 sont reliées par des canalisations 68 et 70 respectivement à un tuyau 72 permettant le passage du mélange de gaz porteurs. C'est ainsi qu'on peut prévoir, par exemple, un réservoir d'argon et un réservoir d'hélium gazeux disposés à l'extérieur de l'enceinte 1 et reliés au tuyau 72 par des canalisations 74 et 76 respectivement.

Il est essentiel de contrôler soigneusement la pression et le débit du gaz liquéfié et du gaz porteur pour que le refroidissement se fasse dans les meilleures conditions. On obtient les meilleurs résultats lorsque les gouttelettes de gaz liquéfié sont sphériques et ont un diamètre inférieur ou égal à 40 microns. D'autre part, pour éviter que ces gouttes ne se réchauffent au contact de l'un des gaz présents dans l'enceinte ou ne réagissent avec lui, la distance de parcours doit être suffisamment faible: la distance entre l'orifice de sortie 59 de la buse 58 et la pièce 8 doit être constante et comprise entre 5 et 100 mm et de préférence entre 5 et 50 mm. L'agencement du dispositif est tel que cette distance ne varie pas lorsque le système de refroidissement se déplace par rapport à la pièce 8. Enfin, le gaz liquéfié doit se présenter sous forme monophasique à son entrée dans la buse, c'est-à-dire non mélangé avec sa vapeur: ce résultat est obtenu par un choix convenable des dimensions de la canalisation d'arrivée du gaz liquéfié. Dans le cas particulier décrit ici, les canalisations telles que 62, 64 et 66 sont des canalisations à double enveloppe, c'est-à-dire constituées de deux tuyaux concentriques entre lesquels on a fait le vide pour assurer une bonne isolation. Si la pression du gaz liquéfié est comprise entre 1 et 1,5 bar, la distance parcourue par le liquide entre le réservoir et la buse doit être inférieure à 5 mètres et le diamètre de passage inférieur à 12 mm.

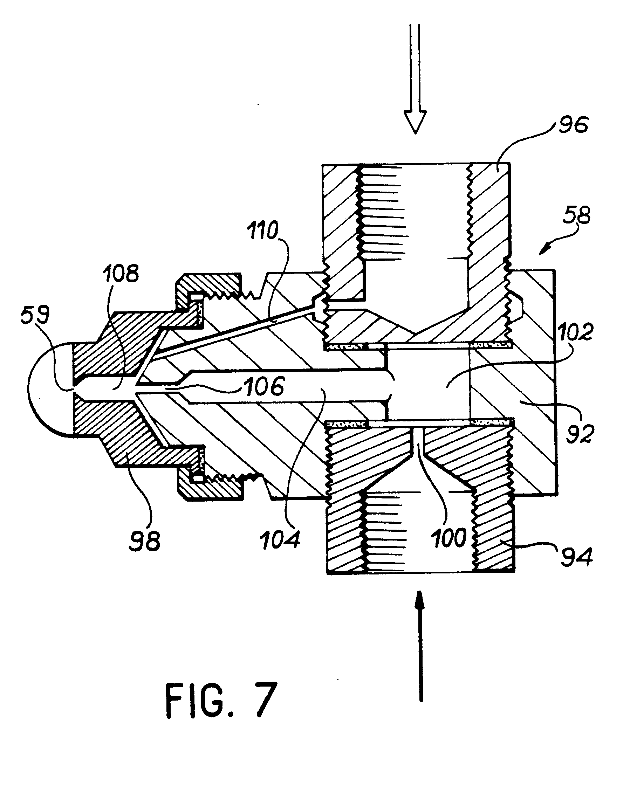

La figure 7 montre plus en détail la constitution d'une buse telle que 58 utilisée dans le dispositif de l'invention. Celle-ci se compose d'un corps 92 sur lequel sont montés un raccord d'entrée 94 du gaz liquéfié de refroidissement et un raccord d'entrée 96 du gaz porteur. Une tête 98, sur laquelle se trouve l'orifice 59 de sortie du liquide de refroidissement, est montée à une extrémité du corps 92. Le raccord d'entrée 94 du gaz liquéfié comporte un orifice 100 qui le met en communication avec une chambre de détente 102 ménagée dans le corps 92 de la buse. Dans ce dernier est également ménagé un conduit 104 qui met la chambre 102 en communication avec un deuxième orifice 106 qui débouche dans une cavité 108 ménagée dans la tête 98 de la buse. Dans le corps 92 de la buse est encore prévu un conduit 110 qui met en communication le raccord d'entrée 96 du gaz porteur avec la cavité 108.

Le fonctionnement de cette buse est le suivant: le liquide arrivant dans le raccord d'entrée 94 passe à travers le premier orifice 100 et arrive dans la chambre 102 où il subit une première détente. Il circule ensuite le long du conduit 104, passe à travers l'orifice 106 et arrive dans la cavité 108 où il subit une deuxième détente. Le gaz porteur arrive par le raccord 96, circule le long du conduit 110 et débouche dans la cavité 108 ceci a pour effet non seulement d'entraîner le gaz liquéfié sous forme de gouttelettes, mais encore de briser les gouttelettes afin de les rendre plus petites et de dimensions homogènes.

La vue de dessus de la figure 5 montre que l'on peut disposer deux groupes de deux buses telles que 58 et 60 pour refroidir la pièce 8 dans la zone où est effectué le dépôt. Par exemple, sur la figure 5, les deux buses 58 et 60 sont placées de telle sorte qu'elles refroidissent la surface de la pièce avant le dépôt, c'est-à-dire avant son passage devant l'orifice du pistolet 10, tandis que deux autres buses 82 et 84 permettent de refroidir la matière déposée immédiatement après la projection (la pièce tournant dans le sens de la flèche F).

On voit également sur la figure 5 un écran de confinement 80 entourant la pièce 8 dans la zone où est effectué le dépôt sur environ la moitié de la circonférence de la pièce. Cet écran permet de protéger la zone qui vient d'être refroidie par les buses 58 et 60 et donc de la maintenir à basse température avant que soit effectué le dépôt, et permet également de maintenir à température suffisamment basse le produit déposé grâce aux deux autres buses 82 et 84.

La figure 6 illustre un autre mode de réalisation du support de la pièce à revêtir lorsque celle-ci se présente non plus sous la forme d'un solide présentant une symétrie de révolution, mais par exemple sous la forme d'une pièce plane. Dans ce cas, le support est un disque 85 placé verticalement et mobile en rotation autour d'un axe horizontal et sur lequel sont disposées les pièces à revêtir qui se présentent sous la forme de disques plans 86, 88 et 90. Eventuellement, on peut disposer encore sur le disque 85 des pièces témoins 87, 89 et 91 qu'on soumettra à des essais pour vérifier le résultat de la projection. Dans ce cas, le pistolet 10 et les buses telles que 58 et 60 sont animés d'un mouvement de translation le long d'un guide 92, le dispositif de synchronisation de la figure 1 étant réglé pour qu'on balaye toute la surface des pièces 86, 88 et 90 par la combinaison des mouvements de translation du pistolet 10 et de rotation du disque 85. Ce dernier peut aussi être équipé d'un

pass.ge tournant comme le support 2 de la figure 1. Bien entendu, si l'on a décrit deux exemples dans lesquels le support était mobile en rotation, soit autour d'un axe vertical, soit autour d'un axe horizontal, d'autres dispositions peuvent être envisagées, en particulier avec un axe de rotation oblique, le dispositif de synchronisation étant réglé en fonction de chaque cas particulier pour réaliser la projection sur toute la surface des pièces à revêtir.

Ainsi, le procédé et le dispositif objets de l'invention présentent des avantages particulièrement intéressants puisqu'ils permettent de réaliser le dépôt d'un grand nombre de produits sur un grand nombre de substrats, même si les matériaux en question sont actifs chimiquement, avides d'oxygène ou résistent mal aux températures élevées. On obtient ce résultat grâce au contrôle permanent de l'atmosphère régnant dans l'enceinte et au système de refroidissement par projection de gouttelettes d'un gaz liquéfié, ce qui permet de maintenir la température de la pièce à des valeurs très basses, malgré l'importante quantité de chaleur apportée par le plasma. On peut également réaliser des dépôts de forte épaisseur, par exemple des céramiques d'épaisseur supérieure à 1 cm.

Quant aux applications, elles sont extrêmement nombreuses, l'invention permettant la projection de la plupart des matériaux utilisés dans l'industrie nucléaire, tels le bore et ses composés (carbure et nitrure de bore), des borures, des siliçures et des carbures comme le carbure de tantale, ainsi que la projection de métaux et alliages, par exemple de nickel, chrome, zirconium et titane. L'invention trouve une application intéressante dans le domaine nucléaire avec la réalisation de protections neutroniques constituées par un cylindre creux avec une âme métallique bicouche recouverte d'un revêtement en alliage de tungstène sur laquelle on dépose une couche mince de carbure de bore de tels éléments sont utilisés en particulier pour des essais d'irradiation. On peut aussi réaliser le revêtement de barrières d'absorption dans les châteaux de stockage utilisés pour le transport de déchets radioactifs et, d'une manière générale, projeter tous les composés d'éléments neutrophages. On peut également réaliser l'ébauchage de pièces épaisses présentant une grande pureté chimique, une bonne tenue mécanique et une bonne usinabilité. On peut encore citer la fabrication de papiers revêtus d'une couche mince de bore (d'épaisseur inférieure à 0,2 mm) et de papier genre papier émeri de même que la fabrication de meules ou la réalisation de revêtements anti-usure sur des pièces tournantes.

## Revendications

1. Procédé de revêtement d'une pièce (8) par projection de plasma, l'opération étant effectuée à l'aide d'un pistolet de projection (10) mobile par rapport à ladite pièce (8), dans lequel on refroidit la pièce (8) à l'aide d'un gaz liquéfié afin de réguler la température des différents points de celle-ci, cette opération étant effectuée à l'aide d'un système de refroidissement (18) mobile par rapport à la pièce (8), caractérisé en ce qu'on effectue l'opération sous atmosphère contrôlée à l'intérieur d'une enceinte étanche (1), en ce qu'on maintient constantes la pression et la composition de l'atmosphère régnant dans l'enceinte (1), en ce qu'on régule la température des différents points de la pièce (8) selon un programme prédéterminé, en ce qu'on pilote de manière automatique les déplacements relatifs de la pièce (8), du pistolet (10) et du système de refroidissement (18), et en ce qu'on projette le gaz liquéfié sous forme de gouttelettes, ces gouttelettes étant confinées dans la zone de la pièce (8) où est effectuée la projection de plasma, le gaz liquéfié étant à une température inférieure à sa température de saturation, l'écart entre ces deux températures êtant inférieur ou égal à 15°C.

2. Procédé selon la revendication 1, caractérisé en ce qu'on analyse en continu l'atmosphère régnant dans ladite enceinte étanche (1) et en ce qu'on réalise le contrôle de cette atmosphère par un balayage de l'enceinte (1) à l'aide d'un gaz, les conditions de balayage étant déterminées en fonction des résultats de l'analyse.

3. Procédé selon l'une quelconque des revendications 1 et 2, caractérisé en ce qu'on effectue la projection de gouttelettes à l'aide d'au moins un gaz porteur.

4. Procédé selon la revendication 3, caractérisé en ce qu'on règle le débit et la pression du gaz liquéfié et du gaz porteur pour que les gouttelettes de gaz liquéfié soient sphériques et aient un diamètre inférieur ou géal à 40 microns.

5. Dispositif pour la mise en oeuvre du procédé selon l'une quelconque des revendications 1 à 4, comportant:
  . un support mobile (2) pour la pièce à revêtir (8),
  . un pistolet (10) de projection de plasma mobile par rapport à ladite pièce (8), et
  . un système de refroidissement (18) également mobile par rapport à ladite pièce (8),
caractérisé en ce que le support mobile (2), le pistolet (10) et le système de refroidissement (18) se trouvent à l'intérieur d'une enceinte étanche et en ce qu'il comporte en outre:
  - un dispositif de synchronisation des mouvements relatifs de la pièce (8), du pistolet (10) et du système de refroidissement (18),
  - des capteurs de température (20, 22), placés à l'intérieur de l'enceinte (1), pour contrôler la température de la pièce (8) et de l'atmosphère régnant dans l'enceinte (1),
- des moyens d'analyse du gaz se trouvant dans l'enceinte (1), et
- des moyens de balayage de l'enceinte (1) à l'aide d'un gaz.

6. Dispositif selon la revendication 5, caractérisé en ce que ledit support (2) est un support mobile en rotation autour d'un axe vertical et dans lequel est prévu un passage tournant.

7. Dispositif selon la revendication 5, caractérisé en ce que ledit support a la forme d'un disque mobile en rotation dans un plan vertical et muni d'un passage tournant.

8. Dispositif selon l'une quelconque des revendications 5 à 7, caractérisé en ce que le pistolet (10) comprend:
- une anode (45) ayant sensiblement la forme d'un cylindre creux,
- une cathode (48) disposée sensiblement concentriquement à ladite anode (45), et
- une enveloppe externe (50, entourant ladite anode (45) et ayant une forme telle qu'elle définit autour de l'anode (45) et de la cathode (48) un passage permettant la circulation d'un liquide de refroidissement, ce passage définissant autour de l'anode (45) une chambre (56) ayant des dimensions suffisamment réduites pour que le liquide puisse s'écouler autour de l'anode (45) avec une vitesse suffisante pour assurer le refroidissement avec une efficacité maximale.

9. Dispositif selon la revendication 8, caractérisé en ce que ladite anode (45) est en cuivre et en ce que les parties de cette anode (45) situées en regard de la cathode (48) sont recouvertes de rhénium.

10. Dispositif selon l'une quelconque des revendications 5 à 9, caractérisé en ce que le système de refroidissement comprend:
- au moins une buse (58) équipée d'un orifice (59) pour la sortie des gouttelettes de gaz liquéfié,
- au moins un réservoir de gaz liquéfié relié à ladite buse (58) par une première canalisation (62),
- au moins un réservoir de gaz porteur relié à ladite buse (58) par une deuxième canalisation (68),
- un écran de confinement (80) placé au voisinage de la zone de la pièce (8) où est effectuée la projection de plasma, et
- au moins un capteur de température (20) pour contrôler la température de la pièce (8).

11. Dispositif selon la revendication 10, caractérisé en ce que ladite buse (58) comprend:
- un raccord d'entrée (94) du gaz liquéfié,
- un premier orifice (100) reliant le raccord d'entrée (94) du gaz liquéfié à une chambre de détente (102),
- un conduit (104) reliant ladite chambre de détente (102) à un deuxième orifice (106),
- une cavité (108) dans laquelle débouche le deuxième orifice (106), cette cavité (108) étant en communication avec l'extérieur par ledit orifice (59) de sortie du liquide de refroidissement,
- un raccord d'entrée (96) du gaz porteur, et
- un conduit (110) reliant le raccord d'entrée (96) du gaz porteur à ladite cavité (108).

12. Dispositif selon l'une quelconque des revendications 10 et 11, caractérisé en ce que la buse (58) et l'écran de confinement (80) sont mobiles par rapport à la pièce (8).

13. Dispositif selon la revendication 12, caractérisé en ce que l'agencement du dispositif est tel que la distance entre l'orifice (59) de la buse (58) et la pièce (8) reste constante au cours du déplacement relatif de la buse (58) et de la pièce (8).

14. Dispositif selon la revendication 13, caractérisé en ce que la distance entre l'orifice (59) et la pièce (8) est comprise entre 5 et 100 mm.

15. Dispositif selon la revendication 14, caractérisé en ce que la distance entre l'orifice (59) et la pièce (8) est comprise entre 5 et 50 mm.

16. Dispositif selon l'une quelconque des revendications 10 à 15, caractérisé en ce que la première canalisation (62) reliant la buse au réservoir de gaz liquéfié est une canalisation à double enveloppe.

17. Dispositif selon l'une quelconque des revendications 10 à 16, caractérisé en ce que les dimensions de ladite première canalisation (62) sont telles que le gaz liquéfié se trouve sous forme monophasique à son entrée dans la buse (58).

18. Dispositif selon l'une quelconque des revendications 16 et 17, caractérisé en ce que ladite première canalisation (62) présente une longueur inférieure ou égale à 5 m et un diamètre de passage du gaz liquéfié inférieur ou égal à 12 mm lorsque la pression de ce dernier est comprise entre 1 et 1,5 bar.

19. Dispositif selon l'une quelconque des revendications 10 à 18, caractérisé en ce que le dispositif de synchronisation des mouvements des différentes pièces mobiles est un dispositif à mémoires mortes comportant des moteurs protégés par un blindage.

20. Dispositif selon l'une quelconque des revendications 10 à 19, caractérisé en ce que chaque appareil situé à l'intérieur de l'enceinte (1) est relié à la terre par un condensateur (9).

21. Dispositif selon l'une quelconque des revendications 10 à 20, caractérisé en ce que ladite enceinte étanche (1) est équipée d'au moins un hublot d'observation imperméable aux rayons ultraviolets.

22. Dispositif selon l'une quelconque des revendications 10 à 21, caractérisé en ce que ladite enceinte étanche (1) est équipée d'une isolation phonique.

**Patentansprüche**

1. Verfahren zur Beschichtung eines Verkstücks (8) mittels Plasmastrahls, wobei dieser Vorgang mit Hilfe einer in bezug auf das genannte Werkstück (8) bewegbaren Spritzpistole (10) durchgeführt wird, und bei welchem Verfahren man das Verkstück (8) mit Hilfe eines Flüssiggases kühlt, damit die Temperatur an verschiedenen Punkten desselben gesteuert wird, wobei dieser Vorgang mit Hilfe eines in bezug auf das Verkstück (8) bewegbaren Kühlsystems (18) durchgeführt wird, dadurch gekennzeichnet, daß man den Vorgang in gesteuerter Atmosphäre innerhalb einer dichten Kammer (1) durchführt, daß man den in der Kammer (1) herrschenden Druck und die Atmosphärenzusammensetzung konstant hält, daß man die Temperatur der verschiedenen Punkte des Verkstücks (8) nach einem vorbestimmten Programm steuert, daß man selbsttätig die relative Verschiebung des Werkstücks (8), der Pistole (10) und des Kühlsystems (18) steuert und daß man das Flüssiggas in der Form von Tröpfchen herausspritzt, wobei diese Tröpfchen auf den Bereich des Verkstücks (8) begrenzt sind, wo das Plasmastrahlen erfolgt, das Flüssiggas eine niedrigere Temperatur als seine Sättigungstemperatur besitzt und der Unterschied zwischen diesen zwei Temperaturen kleiner oder gleich 15°C ist.

2. Verfahren nach Anspruch 1, dadurch gekennzeichnet, daß man fortlaufend die in der genannten dichten Kammer (1) herrschende Atmosphäre analysiert und daß man die Steuerung dieser Atmosphäre durch ein Sprühen der Kammer (1) mit Hilfe eines Gases vornimmt, wobei die Sprühbedingungen in Abhängigkeit von den Analyseergebnissen bestimmt werden.

3. Verfahren nach irgendeinem der Ansprüche 1 oder 2, dadurch gekennzeichnet, daß das Herausschleudern der Tröpfchen mit Hilfe wenigstens eines Trägergases durchgeführt wird.

4. Verfahren nach Anspruch 3, dadurch gekennzeichnet, daß man den Fluß und den Druck des Flüssiggases und des Trägergases regelt, damit die Tröpfchen des Flüssiggases kugelförmig sind und einen Durchmesser von weniger oder gleich 40 μm aufweisen.

5. Vorrichtung zur Durchführung des Verfahrens nach irgendeinem der Ansprüche 1 bis 4, umfassend:
. eine bewegbare Stütze (2) für das zu überziehende Verkstück (8),
. eine in bezug auf das genannte Verkstück (8) bewegbare Plasmastrahlpistole (10), und
. ein ebenfalls in bezug auf das genannte Verkstück (8) bewegbaren Kühlsystem (18), dadurch gekennzeichnet, daß sich die bewegbare Stütze (2), die Pistole (10) und das Kühlsystem (18) innerhalb einer dichten Kammer befinden, und daß die Vorrichtung ferner umfaßt:
- eine Synchronisationsvorrichtung für die Relativbewegungen des Werkstücks (8), der Pistole (10) und des Kühlsystems (18),
- im Inneren der Kammer (1) angeordnete Temperaturfühler (20, 22), um die Temperatur des Werkstücks (8) und der in der Kammer (1) herrschenden Atmosphäre zu steuern, Analysemittel für das sich in der Kammer (1) befindende Gas, und
- Mittel zum Sprühen der Kammer (1) mit Hilfe eines Gases.

6. Vorrichtung nach Anspruch 5, dadurch gekennzeichnet, daß die genannte Stütze (2) eine um eine vertikale Achse drehbewegbare Stütze ist und in ihr ein drehbarer Durchlaß vorgesehen ist.

7. Vorrichtung nach Anspruch 5, dadurch gekennzeichnet, daß die genannte Stütze die Form einer in einer vertikalen Ebene drehbewegbaren Scheibe aufweist und mit einem drehbaren Durchlaß versehen ist.

8. Vorrichtung nach irgendeinem der Ansprüche 5 bis 7, dadurch gekennzeichnet, daß die Pistole (10) umfaßt:
- eine Anode (45), die im wesentlichen die Form eines Hohlzylinders aufweist,
- eine Kathode (48), die im wesentlichen konzentrisch zu der genannten Anode (45) angeordnet ist, und
- einen Außenmantel (50), der die genannte Anode (45) umgibt und eine solche Form aufweist, daß er um die Anode (45) und die Kathode (48) herum einen Durchlaß begrenzt, der die Durchströmung einer Kühlflüssigkeit erlaubt, wobei dieser Durchlaß um die Anode (45) herum eine Kammer (56) begrenzt, die ausreichend kleine Abmessungen aufweist, damit die Flüssigkeit um die Anode (45) herum mit einer ausreichenden Geschwindigkeit strömen kann, um die Kühlung mit einem maximalen Wirkungsgrad sicherzustellen.

9. Vorrichtung nach Anspruch 8, dadurch gekennzeichnet, daß die genannte Anode (45) aus Kupfer ist und die der Kathode (48) gegenüberliegenden Teile dieser Anode (45) mit Rhenium überzogen sind.

10. Vorrichtung nach irgendeinem der Ansprüche 5 bis 9, dadurch gekennzeichnet, daß das Kühlsystem umfaßt:
- wenigstens eine Düse (58), die mit einer Öffnung (59) für den Austritt der Flüssiggaströpfchen ausgerüstet ist,
- wenigstens einen Flüssiggasbehälter, der mit der genannten Düse (58) über eine erste Leitung (62) verbunden ist,
- wenigstens einen Trägergasbehälter, der mit der genannten Düse (58) über eine zweite Leitung (68) verbunden ist,
- eine Abschirmung (80), die dem Bereich des Verkstücks (8) benachbart angeordnet ist, wo das Plasmastrahlen erfolgt, und
- wenigstens einen Temperaturfühler (20), um die Temperatur des Verkstücks (8) zu kontrollieren.

11. Vorrichtung nach Anspruch 10, dadurch gekennzeichnet, daß die genannte Düse (58) umfaßt:
- einen Einlaßanschluß (94) für das Flüssiggas,
- eine erste Öffnung (100), die den Einlaßanschluß (94) für das Flüssiggas mit einer Entspannungskammer (102) verbindet,
- eine Leitung (104), die die genannte Entspannungskammer (102) mit einer zweiten Öffnung (106) verbindet,
- ein Hohlraum (108), in den die zweite Öffnung (106) mündet, wobei dieser Hohlraum (108) über die genannte Auslaßöffnung für die Kühlflüssigkeit mit der Umgebung in Verbindung steht,
- einen Einlaßanschluß (96) für das Trägergas, und
- eine Leitung (110), die den Einlaßanschluß (96) für das Trägergas mit dem genannten Hohlraum (108) verbindet.

12. Vorrichtung nach irgendeinem der Ansprüche 10 oder 11, dadurch gekennzeichnet, daß die Düse (58) und die Abschirmung (80) in bezug auf das Werkstück (8) bewegbar sind.

13. Vorrichtung nach Anspruch 12, dadurch gekennzeichnet, daß die Ausbildung der Vorrichtung derart ist, daß der Abstand zwischen der Öffnung (59) der Düse (58) und dem Werkstück (8) während der relativen Verschiebung der Düse (58) und des Werkstücks (8) konstant bleibt.

14. Vorrichtung nach Anspruch 13, dadurch gekennzeichnet, daß der Abstand zwischen der Öffnung (59) und dem Werkstück (8) zwischen 5 und 100 mm liegt.

15. Vorrichtung nach Anspruch 14, dadurch gekennzeichnet, daß der Abstand zwischen der Öffnung (59) und dem Werkstück (8) zwischen 5 und 50 mm liegt.

16. Vorrichtung nach irgendeinem der Ansprüche 10 bis 15, dadurch gekennzeichnet, daß die erste Leitung (62), die die Düse mit dem Flüssiggasbehälter verbindet, eine Doppelmantelleitung ist.

17. Vorrichtung nach irgendeinem der Ansprüche 10 bis 16, dadurch gekennzeichnet, daß die Abmessungen der genannten ersten Leitung (62) derart sind, daß sich das Flüssiggas bei seinem Eintritt in die Düse (58) in einem einphasigen Zustand befindet.

18. Vorrichtung nach irgendeinem der Ansprüche 16 oder 17, dadurch gekennzeichnet, daß die genannte erste Leitung (62) eine Länge von weniger oder gleich 5 m und einen Durchlaßdurchmesser für das Flüssiggas von weniger oder gleich 12 mm aufweist, wenn der Druck dieses Letzteren zwischen 1 und 1,5 bar liegt.

19. Vorrichtung nach irgendeinem der Ansprüche 10 bis 18, dadurch gekennzeichnet, daß die Synchronisationsvorrichtung für die Bewegungen der verschiedenen bewegbaren Teile eine Festspeichervorrichtung ist, die durch eine Abschirmung geschützte Motoren aufweist.

20. Vorrichtung nach irgendeinem der Ansprüche 10 bis 18, dadurch gekennzeichnet, daß jedes sich im inneren der Kammer (1) befindende Gerät über einen Kondensator (9) mit Masse verbunden ist.

21. Vorrichtung nach irgendeinem der Ansprüche 10 bis 20, dadurch gekennzeichnet, daß die genannte dichte Kammer (1) mit wenigstens einem für ultraviolette Strahlen undurchlässigen Beobachtungsfenster ausgerüstet ist.

22. Vorrichtung nach irgendeinem der Ansprüche 10 bis 21, dadurch gekennzeichnet, daß die genannte dichte Kammer (1) mit einer Schallisolierung ausgerüstet ist.

## Claims

1. Process for coating a member (8) by plasma spraying, the operation being carried out with the aid of a spray gun (10) movable with respect to said member (8), in which the member (8) is cooled with the aid of a liquefied gas in order to regulate the temperature of the different points thereof, said operation being performed with the aid of a cooling system (18) movable with respect to the member (8), characterized in that the operation is performed under a controlled atmosphere within a tight enclosure (1), in that the pressure and composition of the atmosphere within the enclosure (1) are maintained constant, in that the temperature of the different points of the member (8) are regulated in accordance with a predetermined program, in that the relative displacements of the member (8), the gun (10) and the cooling system (18) are automatically regulated and in that the liquefied gas is sprayed in droplet form, said droplets being confined in the zone of member (8) where plasma spraying takes place, the liquefied gas being at a temperature below its saturation point, the difference between these two temperatures being equal to or below 15° C.

2. Process according to claim 1, characterized in that the atmosphere prevailing in said tight enclosure (1) is continuously analyzed and in that this atmosphere is checked by scavenging the enclosure (1) with the aid of a gas, the scavenging conditions being determined as a function of the analysis results.

3. Process according to either of the claims 1 and 2, characterized in that the droplets are sprayed with the aid of at least one carrier gas.

4. Process according to claim 3, characterized in that the flow rate and pressure of the liquefied gas and carrier gas are regulated so that the liquefied gas droplets are spherical and have a diameter equal to or smaller than 40 microns.

5. Apparatus for performing the process according to any one of the claims 1 to 4 comprising a moving support (2) for the member (8) to be coated, a gun (10) for plasma spraying which is movable with respect to said member (8) and a cooling system (18) also movable with respect to said member (8), characterized in that the movable support (2), the gun (10) and the cooling system (18) are located within a tight enclosure and that it also comprises a device for synchronizing the relative movements of member (8), gun (10) and cooling system (18), temperature sensors (20, 22) placed within the enclosure (1) for checking the temperature of member (8) and the atmosphere in enclosure (1), means for analyzing the gas within enclosure (1) and means for scavenging enclosure (1) with the aid of a gas.

6. Apparatus according to claim 5, characterized in that support (2) is a support which is mobile in rotation about a vertical axis and in which is provided a rotary passage.

7. Apparatus according to claim 5, characterized in that said support is in the form of a disk rotatable in a vertical plane and having a rotary passage.

8. Apparatus according to any one of the claims 5 to 7, characterized in that the gun (10) comprises an anode (45) substantially shaped like a hollow cylinder, a cathode (48) arranged substantially concentrically to anode (45) and an outer envelope (50) surrounding said anode (45) and shaped in such a way that around anode (45) and cathode (48) it defines a passage permitting the circulation of a cooling liquid, said passage defining around anode (45) a chamber (56) having sufficiently reduced dimensions to enable the liquid to flow around anode (45) at an adequate speed to ensure cooling with maximum efficiency.

9. Apparatus according to claim 8, characterized in that anode (45) is made from copper and in that the parts of said anode (45) facing cathode (48) are covered with rhenium.

10. Apparatus according to any one of the claims 5 to 9, characterized in that the cooling system comprises at least one nozzle (58) having an orifice (59) for the discharge of the liquefied gas droplets, at least one liquefied gas tank connected to said nozzle (58) by a first duct (62), at least one carrier gas tank connected to said nozzle (58) by a second duct (68), a confinement shield (80) placed in the vicinity of the zone of member (8) where plasma spraying takes place and at least one temperature sensor (20) for checking the temperature of member (8).

11. Apparatus according to claim 10, characterized in that nozzle (58) comprises a liquefied gas intake connection (94), a first orifice (100) linking the intake connection (94) for the liquefied gas to an expansion chamber (102), a duct (104) connecting said expansion chamber (102) to a second orifice (106), a cavity (108) into which issues the second orifice (106), said cavity (108) being linked with the exterior by sad cooling liquid outlet orifice (59), a carrier gas intake connection (96) and a duct (110) linking the inlet connection (96) for the carrier gas with said cavity (108).

12. Apparatus according to either of the claims 10 and 11, characterized in that the nozzle (58) and the confinement shield (80) are mobile with respect to member (8).

13. Apparatus according to claim 12, characterized in that the arrangement of the apparatus is such that the distance between the orifice (59) of nozzle (58) and member (8) remains constant during the relative displacement of nozzle (58) and member (8).

14. Apparatus according to claim 13, characterized in that the distance between orifice (59) and member (8) is between 5 and 100 mm.

15. Apparatus according to claim 14, characterized in that the distance between orifice (59) and member (8) is between 5 and 50 mm.

16. Apparatus according to any one of the claims 10 to 15, characterized in that the first duct (62) linking the nozzle with the liquefied gas tank is a double envelope duct.

17. Apparatus according to any one of the claims 10 to 16, characterized in that the dimensions of said first duct (62) are such that the liquefied gas is in monophase form when it enters nozzle (58).

18. Apparatus according to either of the claims 16 and 17, characterized in that said first duct (62) has a length equal to or below 5 m and a liquefied gas passage diameter equal to or below 12 mm when the pressure of the latter is between 1 and 1.5 bar.

19. Apparatus according to any one of the claims 10 to 18, characterized in that the device for synchronizing the movements of the different moving parts is a read-only memory device having motors protected by a shielding system.

20. Apparatus according to any one of the claims 10 to 19, characterized in that each apparatus located within enclosure (1) is connected to earth by a capacitor (9).

21. Apparatus according to any one of the claims 10 to 20, characterized in that said tight enclosure (1) is provided with at least one observation port-hole impermeable to ultraviolet rays.

22. Apparatus according to any one of the claims 10 to 21, characterized in that the tight enclosure (1) is equipped with sound insulation.

FIG.1

FIG. 2

FIG. 3

FIG. 4

# FIG.5

80

10

F

60

58   8   82   84

# FIG.6

87

86   88

85

58
60   10   92

91

89

90

FIG. 7